# EUROPÄISCHE PATENTANMELDUNG

(11) **EP 1 146 017 A2**
(43) Veröffentlichungstag der Anmeldung: **17.10.2001**
(21) Anmeldenummer: 00127881.1
(22) Anmeldetag: 20.12.2000
(51) Int. Cl.: C03B 5/167, F27D 9/00, F27D 23/00

(54) **Bauteil versehen mit einer Beschichtung zum Behandeln von Schmelzen**

(30) Priorität: 19.01.2000 DE 10002020
(71) Anmelder: Schott Glas, 55122 Mainz (DE); Carl-Zeiss-Stiftung trading as Schott Glas, 55122 Mainz (DE)
(72) Erfinder: Kunert, Christian, 55118 Mainz (DE); Kolberg, Uwe, Dr., 55252 Mainz-Kastel (DE); Kiefer, Werner, Dr., 55126 Mainz (DE); Römer, Hildegard, Dr., 61184 Karben (DE); Ohmstede, Volker, 55129 Mainz (DE)
(74) Vertreter: Dr. Weitzel & Partner

(57) **Zusammenfassung**

Die Erfindung betrifft ein Bauteil für eine Vorrichtung zum Behandeln von Schmelzen, insbesondere von Glasschmelzen;
- mit einem Grundkörper aus Metall oder einer Metallegierung;
- mit einem Kühlsystem, bei dem ein Kühlmedium zum Abführen von Wärme durch das Bauteil hindurchgeleitet wird;
- der Grundkörper ist mit einer Beschichtung aus einem Material versehen, dessen Zersetzungstemperatur unter der Temperatur der Schmelze liegt;
- das Kühlsystem ist derart gestaltet und angeordnet, daß die Temperatur der das Bauteil unmittelbar umgebenden Grenzschicht der Schmelze unterhalb der Zersetzungstemperatur des Beschichtungsmaterials liegt.

## Beschreibung

Die Erfindung betrifft das Behandeln von Schmelzen, insbesondere von Glasschmelzen. Die Erfindung betrifft vor allem Bauteile, die hierbei Anwendung finden.

Beim Behandeln von Glasschmelzen werden Wannen oder Tiegel sowohl zum Herstellen einer Schmelze als auch zu deren Läutern verwendet. Dem Läuter-Prozeß ist eine Homogenisierungsstufe nachgeschaltet. Bei allen diesen Behandlungsschritten werden Bauteile der unterschiedlichsten Art in die flüssige Schmelze eingebracht. Beim Schmelzprozeß sind dies beispielsweise Elektroden, mit denen Wärmeenergie aufgrund des Joulschen Effekts in die Schmelze eingebracht wird. Beim Läutern werden Rohre in die Schmelze eingeführt, um Gase einzuleiten. Beim Homogenisieren läuft ein Rührer in der Schmelze um.

Derartige in die Schmelze eintauchende Bauteile sind unter Verwendung von Edelmetallen oder Edelmetallegierungen aufgebaut. Die Temperatur ist hierbei eine kritische Größe. Bei hohen Temperaturen nimmt nämlich die Festigkeit von Edelmetallen ab. Außerdem nimmt die Gefahr eines korrosiven Angriffs des Edelmetalls durch die Schmelze zu. Zur Abhilfe werden die genannten Bauteile mit einem Kühlsystem versehen, wobei ein Kühlmedium durch das Innere des Bauteiles hindurchgeführt wird. Je nach Anforderung kommt als Kühlmedium Öl, Wasser, Luft oder sonstige Stoffe in Betracht.

Die Kühlung kann ungünstige Nebenwirkungen hervorrufen. So können an manchen Stellen, an denen die Kühlung besonders intensiv ist, aggressive Substanzen, die in der Schmelze enthalten sind, kondensieren und zu Korrosion führen. So ist es beispielsweise bekannt, wassergekühlte Kupferrohre durch einen brennerbeheizten Oberofenraum hindurchzuführen. Im Oberofenraum befinden sich schwefelhaltige Abgase, die auf den Rohrenkondensieren und zu Korrosion führen. Die Lebensdauer solcher Kupferrohre beträgt daher maximal 6 Monate.

Darüber hinaus kann folgendes eintreten: Im Oberofenraum befinden sich Substanzen, die nur bei hoher Temperatur existieren können. Ab gewissen Temperaturen, die durch die Kühlung erzeugt werden, kristallisieren diese Substanzen bzw. deren Zersetzungsprodukte aus. Nach einer bestimmten Zeit fallen Kristalle in die Schmelze und machen diese unbrauchbar. Im Oberofenraum befindet sich außerdem Wasserdampf. Dieser kann an den gekühlten Flächen kondensieren. Hierdurch entsteht örtlich die Gefahr elektrischer Kurzschlüsse.

Der Erfindung liegt die Aufgabe zugrunde, gekühlte, metallische Bauteile der genannten Art für Vorrichtungen zum Behandeln von Schmelzen, insbesondere von Glasschmelzen, derart zu gestalten, daß sie in den Gasraum über der Schmelze oder durch diesen Gasraum hindurch in die Schmelze eingeführt werden können, ohne daß es zu einer Korrosion der metallischen Flächen oder zu einer Bildung von Kristallen kommt, und daß die Gefahr elektrischer Kurzschlüsse durch kondensierende Substanzen minimiert oder ausgeschlossen werden.

Diese Aufgabe wird durch die Merkmale von Anspruch 1 gelöst.

Zur Lösung dieser Aufgabe werden die Bauteile gemäß der Erfindung mit einem Material beschichtet, dessen Zersetzungstempteratur unter der Temperatur der Schmelze liegt. Vorzugsweise besteht ein solches Material aus Kunststoff.

Der Gedanke, als Beschichtungsmaterial ein Material zu verwenden, dessen Schmelz- oder Zersetzungstemperatur unterhalb der herrschenden Umgebungstemperatur liegt, muß auf den ersten Blick absurd erscheinen. Die Erfinder haben jedoch folgendes erkannt: Die Kühlung des betreffenden Bauteiles bewirkt, daß die Kontakttemperatur zwischen dem Beschichtungsmaterial einerseits und der umgebenden Schmelze andererseits unterhalb der Zersetzungs- oder Schmelztemperatur des Beschichtungsmateriales bleibt. Bei Versuchen hat sich überraschenderweise gezeigt, daß selbst eine Beschichtung mit Kuhststoffen mit einer Zersetzungstemperatur von unter 300° C den Einsatz in Gefäßen mit Temperaturen über 1300° C übersteht. Voraussetzung ist die richtige Abstimmung zwischen der Kühlung einerseits und der Beschichtung andererseits. Im einzelnen bedeutet dies, daß die Parameter der Kühlung - Durchsatz und Temperatur des Kühlmediums, Wärmeleitfähigkeit, Wandstärke, Konstruktion -, sowie die Parameter der Beschichtung - Schichtdicke, Wärmeleitfähigkeit - richtig bemessen werden müssen. Als Beschichtungsmaterial kommen niedrigschmelzende Metalle, Legierungen sowie Kunststoffe in Betracht.

Zur Unterdrückung von Kondensation und Kristallisation im Gasraum bei gleichzeitiger elektrischer Isolation haben sich Kunststoffe als besonders geeignet erwiesen. Insbesondere halogenhaltige, vergleichsweise temperaturbeständige Kunststoffe wie Teflon® (PTFE) oder Perfluoralkoxy (PFA)- Kunststoffe mit Zersetzungstemperaturen von ca. 300° C haben sich bewährt. Bei effizienter Wasserkühlung und gut wärmeleitfähigen Trägermaterialien sind jedoch auch kostengünstigere, niedriger schmelzende Kunststoffe wie Polypropylen (PP), Polyethylen (PE) oder Polyvinylchlorid (PVC) einsetzbar.

Der Effekt der Unterdrückung der Kondensaton und Kristallisation beruht Phänomenen: einerseits wird durch die thermische Isolationswirkung des Kunststoffs die Oberflächentemperatur des Metall-Kunststoff-Verbundsystemes auf Werte über 100 °C gebracht, so daß ein Wasser (als Lösungsmittel für alle anderen, in der Atmosphäre enthaltenen Substanzen) mehr kondensiert.

Andererseits werden die verwendeten Dichtungsmaterialien von möglichen Kondensaten nicht benetzt. Selbst wenn sich kleine Tropfen bilden, laufen diese sehr schnell ab. Eine Kristallisation wird wirksam dadurch unterdrückt, daß potentiell sich abscheidende Substanzen auf Kunststoffen kein geeignetes Atomgitter zum Aufwachsen vorfinden. Da die verwendeten Kunststoffe elektrische Nichtleiter sind, wird durch eine Kunststoffbeschichtung die Gefahr von Kurzschlüssen oder Lichtbögen beseitigt oder minimiert.

Die Vorteile der Erfindung lassen sich somit wie folgt zusammenfassen:

Durch Anwendung der Erfindung wird sichergestellt, daß gekühlte Bauteile, die sich entweder in einer heißen Schmelze oder in dem darüber befindlichen Gasraum befinden, zuverlässig gegen Korrosion geschützt werden. Gleichzeitig erfüllt das Kühlsystem die gestellte Aufgabe, in dem es dafür sorgt, daß das betreffende Bauteil selbst gegen zu hohe Temperaturen geschützt wird.

Weiterhin wird in zuverlässiger Weise verhindert, daß sich Kristalle bilden, die den Prozeß nachteilig beeinträchtigen.

Schließlich wird eine zuverlässige elektrische Isolierung bewirkt und damit die Gefahr von elektrischen Kurzschlüssen vermieden.

### Ausführungsbeispiele:

### Beispiel 1:

Bei der Herstellung von hochreinen Gläsern für Lichtleitfasern wurde für die Homogenisierung ein rotierender PFA-beschichteter Rührer eingesetzt. Der Rührer bestand aus einem durchgängigen, einem umgekehrten T entsprechenden Kupferrohr, das außen mit einer 250 um dicken PFA-Schicht überzogen war und von Kühlwasser durchströmt wurde. Durch die Kühlung entstand auf dem in die Schmelze eingetauchten Teil des Rührers eine erstarrte Glasschicht. Selbst bei mehrstündigem Einsatz blieb die Beschichtung erhalten, eine für eine Kupferverunreinigung charakteristische Grünfärbung des anhaftenden Glases trat nicht auf. An dem Teil des Rührers, der sich oberhalb der Schmelze befand, trat nur sehr geringe Kondensation von verdampfenden Glasbestandteilen auf. Versuche mit wassergekühlten Kupferbauteilen mit dünneren PTFE-Schichten waren ebenfalls erfolgreich.

### Beispiel 2:

Für die Einleitung von Chlorgas in Laserglasschmelzen zur Erniedrigung des OH-Gehaltes wurde ein wassergekühltes Doppelrohr aus Platin mit einer 150 µm dicken PFA-Außenbeschichtung verwendet. Am eingetauchten Teil des Rohres bildete sich ebenfalls eine erstarrte Glasschicht, die Kunststoffschicht wurde nicht angegriffen. Am oberhalb der Schmelze liegenden Teil, wo sich bei der Verwendung unbeschichteter Einleitungsrohre eine Vielzahl von Kristallen bildet, wurden keine Kristalle gefunden.

Bei den bisherigen Versuchen wurde mit Glasschmelzen gearbeitet. Der Einsatz einer erfindungsgemäßen Vorrichtung im Kontakt mit sonstigen Oxid-, Salz- oder Metallschmelzen ist jedoch ebenfalls bei geeigneter Auslegung der Kühlung und Auswahl der Beschichtung ohne weiteres möglich.

Die Schichtdicke des Beschichtungsmateriales darf nicht zu groß sein. Dies hat folgenden Grund: Kunststoff ist bekanntlich ein Wärmedämmstoff und behindert somit den Wärmefluß von der einen Seite der Beschichtung zur anderen. Ist die Schicht zu dick, so kann dies dazu führen, daß der Schmelze, die sich im Kontaktbereich mit dem Kunststoff befindet, nicht mehr genügend Wärme durch das im metallischen Gegenstand strömende Kühlmedium entzogen wird. Der genannte Kontaktbereich nimmt dann Temperaturen an, die oberhalb der Zersetzungstemperatur des Kunststoffes liegen.

## Patentansprüche

1. Bauteil für eine Vorrichtung zum Behandeln von Schmelzen, insbesondere von Glasschmelzen;
1.1 mit einem Grundkörper aus Metall oder einer Metallegierung;
1.2 mit einem Kühlsystem, bei dem ein Kühlmedium zum Abführen von Wärme durch das Bauteil hindurchgeleitet wird;
1.3 der Grundkörper ist mit einer Beschichtung aus einem Material versehen, dessen Zersetzungstemperatur unter der Temperatur der Schmelze liegt;
1.4 das Kühlsystem ist derart gestaltet und angeordnet, daß die Temperatur der das Bauteil unmittelbar umgebenden Grenzschicht der Schmelze unterhalb der Zersetzungstemperatur des Beschichtungsmaterials liegt.

2. Bauteil nach Anspruch 1, dadurch gekennzeichnet, daß das Beschichtungsmaterial ein Kunststoff ist.

3. Bauteil nach Anspruch 1 oder 2, dadurch gekennzeichnet, daß der Kunststoff halogenhaltig ist.

4. Bauteil nach einem der Ansprüche 1 bis 3, dadurch gekennzeichnet, daß die Schichtdicke kleiner als 1 mm ist.

5. Bauteil nach Anspruch 4, dadurch gekennzeichnet, daß die Schichtdicke zwischen 20 und 250 µ liegt, vorzugsweise zwischen 40 und 200 µ.

6. Bauteil nach einem der Ansprüche 1 bis 5, dadurch gekennzeichnet, daß der Grundkörper aus Kupfer, Platin, Stahl oder Aluminium, oder aus Legierungen dieser Metalle besteht.

7. Bauteil nach einem der Ansprüche 1 bis 6, dadurch gekennzeichnet, daß es ein Rührer zur Homogenisierung von Schmelzen ist.

8. Bauteil nach einem der Ansprüche 1 bis 6, dadurch gekennzeichnet, daß es eine Rohrleitung zum Einleiten von Gasen in Schmelzen ist.

9. Bauteil nach einem der Ansprüche 1 bis 6, dadurch gekennzeichnet, daß es ein Elektrodenhalter ist.
